(19) Europäisches Patentamt
European Patent Office
Office européen des brevets

(11)     EP 2 694 935 B1

(12)     EUROPÄISCHE PATENTSCHRIFT

(45) Veröffentlichungstag und Bekanntmachung des Hinweises auf die Patenterteilung:
**16.11.2016   Patentblatt 2016/46**

(51) Int Cl.:
***G01L 3/04*** *(2006.01)*

(21) Anmeldenummer: **12707080.3**

(22) Anmeldetag: **29.02.2012**

(86) Internationale Anmeldenummer:
**PCT/EP2012/053425**

(87) Internationale Veröffentlichungsnummer:
**WO 2012/130551 (04.10.2012 Gazette 2012/40)**

(54) **KURBELTRIEB FÜR EIN FAHRRAD**

CRANK DRIVE FOR A BICYCLE

TRANSMISSION À MANIVELLES POUR UNE BICYCLETTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.04.2011   DE 102011006637**

(43) Veröffentlichungstag der Anmeldung:
**12.02.2014   Patentblatt 2014/07**

(73) Patentinhaber: **Robert Bosch GmbH
70442 Stuttgart (DE)**

(72) Erfinder: **STAWINSKI, Reinhard
76137 Karlsruhe (DE)**

(56) Entgegenhaltungen:
**CN-Y- 201 201 674      JP-A- 2011 025 876
NL-C- 2 002 322      US-A1- 2008 282 811
US-B1- 6 851 497**

**Beschreibung**

Stand der Technik

Die vorliegende Erfindung betrifft einen Kurbeltrieb für ein Fahrrad, ein Fahrrad mit einem derartigen Kurbeltrieb sowie eine Sensoranordnung.

Für Fahrräder mit einem elektromotorischen Hilfsantrieb (die auch als "Pedelecs" oder eBikes bezeichnet werden) wird eine Sensoranordnung benötigt, die die Trittfrequenz des Fahrers (Fahrwunsch) erfasst. Diese Sensoranordnung sollte idealerweise in der Tretkurbelwelle integriert sein, um die Signalkette von den Tretkurbeln zur Sensoranordnung möglichst kurz zu halten. Um ein besseres Verhalten insbesondere beim Anfahren an Steigungen zu erhalten, ist eine Sensorkombination für Trittfrequenz und Drehmoment wünschenswert.

Da es sich bei Tretkurbelwellen von Fahrrädern um voll rotierende Wellen handelt, sind aus Gründen der Lebensdauer berührungslose Sensorsysteme von Vorteil. Ein Trittfrequenzsensor (Bestimmung der Rotationsgeschwindigkeit der Tretkurbelwelle) ist leicht mit herkömmlichem Ringmagneten und Hallsensoren als berührungsloses Messsystem realisierbar. Bei Drehmoment-Sensoranordnungen ist dies jedoch schwieriger. Derzeit bekannte Systeme arbeiten zumeist auf induktiver Basis. Diese Systeme haben jedoch den Nachteil, dass sie äußerst anfällig auf störende Magnetfelder reagieren.

So können derartige Systeme durch Austausch der Magnete oder durch Entfernen der Magnete manipuliert werden. Hierdurch ergeben sich bei einer höheren Fahrleistung Probleme, da derartige Leistungserhöhungen einen Gesetzesverstoß darstellen, und bei sich ergebenden niedrigeren Fahrleistungen wäre ein unerwünschter Leistungsverlust die Folge. Ferner kann durch derartige Manipulationen das gesamte System völlig außer Betrieb gesetzt werden.

Des Weiteren sind aufgrund der benötigten Magnetisierungseigenschaften zumeist spezielle Materialien notwendig, die im Vergleich zu herkömmlichen Materialien, wie z. B. Stahl, teuer sind und häufig nicht den gleichen mechanischen Beanspruchungen standhalten.

Der nächstliegend bekanntgewordene Stand der Technik ist den JP2011025876 zu entnehmen. Offenbarung der Erfindung

Es ist daher wünschenswert, einen Kurbeltrieb für ein Fahrrad sowie ein Fahrrad mit einem derartigen Kurbeltrieb zu schaffen, bei denen das Drehmoment in der Tretkurbelwelle berührungslos erfasst werden kann, ohne die Nachteile bekannter induktiver Systeme in Kauf nehmen zu müssen.

Der erfindungsgemäße Kurbeltrieb und das erfindungsgemäße Fahrrad haben den Vorteil einer berührungslos arbeitenden Sensoranordnung zur Erfassung des auf die Tretkurbelwelle aufgebrachten Drehmoments, wobei diese Sensoranordnung darüber hinaus unempfindlich gegen magnetische Störeinflüsse ist. Ferner ergibt sich der Vorteil, dass für den erfindungsgemäßen Kurbeltrieb und das erfindungsgemäße Fahrrad weitestgehend Standardmaterialien verwendbar sind.

Im einzelnen weist der erfindungsgemäße Kurbeltrieb eine Tretkurbelwelle auf, an deren freien Enden die Tretkurbeln fixiert sind. Ferner ist der Kurbeltrieb mit einem elektromotorischen Hilfsantrieb und einer Drehmoment-Sensoranordnung versehen, die es möglich macht, ein auf die Tretkurbelwelle aufgebrachtes Drehmoment zu erfassen. Hierbei ist die Drehmoment-Sensoranordnung als Piezo-Sensoranordnung ausgebildet, die die Erreichung der zuvor im einzelnen genannten Vorteile, wie insbesondere die Unempfindlichkeit gegenüber magnetischen Störeinflüssen, möglich macht.

Die Unteransprüche haben vorteilhafte Weiterbildungen der Erfindung zum Inhalt.

Da die Tretkurbelwelle bei einer besonders bevorzugten Ausführungsform ein Teil der Sensoranordnung darstellt, ergibt sich der Vorteil einer äußerst kompakten Bauweise, die darüber hinaus eine Minimierung der herzustellenden und zu montierenden Bauteile möglich macht.

Die Kompaktheit der Kurbeltriebanordnung der vorliegenden Erfindung wird noch dadurch verbessert, dass eine Sensorhülse auf der Tretkurbelwelle aufgebracht, vorzugsweise aufgepresst wird, die eine Innenverzahnung aufweist, die mit einer Außenverzahnung der Tretkurbelwelle dadurch zusammenwirkt, dass zwischen den Zähnen der Außenverzahnung und der Innenverzahnung zumindest ein Piezoelement angeordnet ist. Hiermit ist eine Drehmomentfassung in einer Rotationsrichtung der Tretkurbelwelle möglich. Alternativ sind zur Erfassung eines Drehmoments in beiden Rotationsrichtungen zwei Piezoelemente vorgesehen.

Eine weitere Vereinfachung des Gesamtaufbaus ergibt sich dadurch, dass auf der Sensorhülse an einem ihrer Enden ein Außen-Zahnkranz angebracht werden kann, der in ein Getrieberad des Hilfsantriebs eingreift.

Die Verbindung zwischen der Sensorhülse und der Tretkurbelwelle kann ferner dadurch vereinfacht werden, dass am anderen Ende der Sensorhülse eine Presspasseinrichtung zu deren Fixierung auf der Tretkurbelwelle vorgesehen ist.

Eine weitere Vereinfachung des Gesamtaufbaus ergibt sich durch den Umstand, dass auf einer Außenwand der Sensorhülse zumindest zwei zueinander beabstandete Metallringe angeordnet sind, die galvanisch von der Sensorhülse getrennt sind und mit dem Piezoelement zwischen der Innenverzahnung der Sensorhülse und der Außenverzahnung der Tretkurbelwelle verbunden sind. Alternativ können auch zwei Piezoelemente zur Drehmomenterfassung in beiden Rotationsrichtungen vorgesehen werden.

Weiterhin bevorzugt ist über der Tretkurbelwelle eine Kunststoffhülse angeordnet, die die gesamte Länge der Tretkurbelwelle überdeckt und die gegenüber dieser frei drehbar vorgesehen ist.

Diese Kunststoffhülse ist auf ihrer Innenwand mit zumindest zwei (oder alternativ vier) beabstandeten Metallringen versehen, die im Montagezustand der Kunststoffhülse auf der Tretkurbelwelle über deren Metallringen angeordnet sind, was ebenfalls vorteilhafterweise zur Kompaktheit des Gesamtaufbaus des erfindungsgemäßen Kurbeltriebs beiträgt.

Die Kunststoffhülse ist vorzugsweise an einem Ende über ein Lager, vorzugsweise ein Kugellager, auf der Tretkurbelwelle gelagert. Es ist jedoch auch möglich, dass beide Enden der Kunststoffhülse über jeweils ein Lager, vorzugsweise ein Kugellager, auf der Tretkurbelwelle gelagert sind.

In den Ansprüchen 13 und 14 ist das erfindungsgemäße Fahrrad als selbstständig handelbares Objekt definiert.

In Anspruch 15 ist eine Sensoranordnung als selbstständig handelbares Objekt definiert.

Kurze Beschreibung der Zeichnung

Nachfolgend wird ein Ausführungsbeispiel der Erfindung unter Bezugnahme auf die begleitende Zeichnung im Detail beschrieben. In der Zeichnung ist:

Figur 1     eine schematische Ansicht eines Fahrrads mit einem integrierten elektromotorischen Hilfsantrieb,

Figur 2     eine schematische Ansicht des erfindungsgemäßen Kurbeltriebs,

Figur 3     eine schematische Ansicht einer Tretkurbelwelle des Kurbeltriebs, gemäß einem ersten Ausführungsbeispiel der Erfindung,

Figur 4     eine schematische Schnittansicht der Tretkurbelwelle von Figur 3,

Figur 5     eine schematische Längsschnittansicht der Tretkurbelwelle von Figur 3,

Figur 6     eine schematische Ansicht einer Tretkurbelwelle des Kurbeltriebs, gemäß einem zweiten Ausführungsbeispiel der Erfindung,

Figur 7     eine schematische Schnittansicht der Tretkurbelwelle von Figur 6,

Figur 8     eine schematische Längsschnittansicht der Tretkurbelwelle von Figur 6,

Figur 9     eine schematische Ansicht der Tretkurbelwelle sowie einer Kunststoffhülse des Kurbeltriebs,

Figur 10    eine schematische Schnittansicht der montierten Drehmoment-Sensoranordnung auf der Tretkurbelwelle, und

Figur 11    eine schematische Darstellung eines Funktionsprinzips zur Ermittlung eines Drehmoments des erfindungsgemäßen Kurbeltriebs.

Ausführungsform der Erfindung

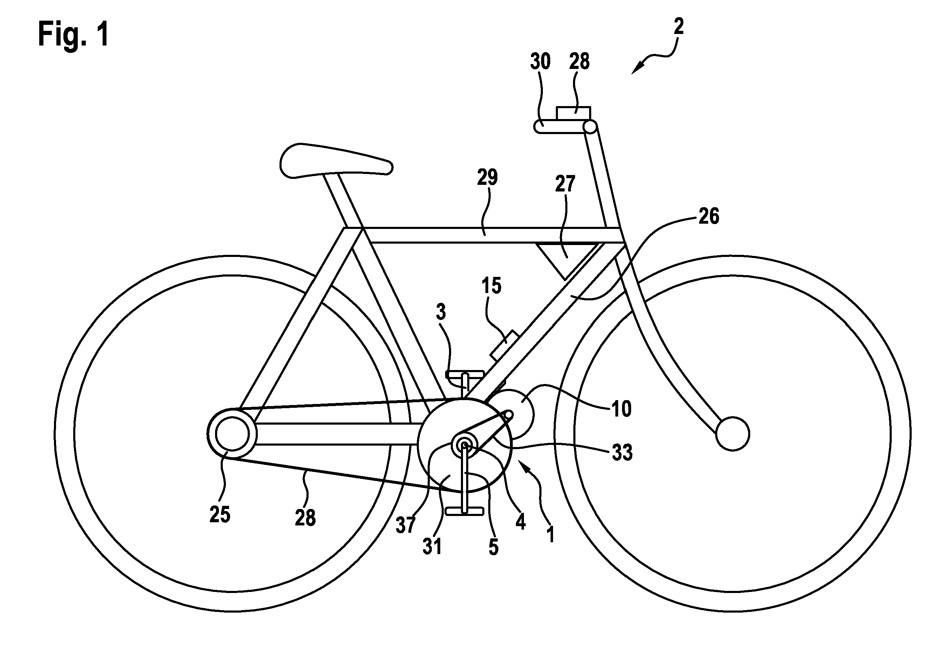

Nachfolgend wird unter Bezugnahme auf die Figuren 1 bis 5 ein erfindungsgemäßer Kurbeltrieb 1 für ein Fahrrad sowie ein Fahrrad mit einem elektrischen Hilfsantrieb und einem derartigen Kurbeltrieb 1 gemäß einem ersten bevorzugten Ausführungsbeispiel detailliert beschrieben.

Figur 1 zeigt eine schematische Darstellung eines Fahrrads 2 mit einem integrierten elektrischen Zusatzantrieb bzw. Zentralantrieb. Wie aus Figur 1 ersichtlich, umfasst der Zentralantrieb einen Kurbeltrieb 1, einen elektrischen bzw. elektromotorischen Hilfsantrieb 10, eine Steuereinheit 15, eine Bedieneinheit 28 und eine wiederaufladbare Energiequelle 27. Der elektromotorische Hilfsantrieb 10 ist unterhalb eines Unterrohrs 26 und in Fahrtrichtung vor dem Kurbeltrieb 1 des Fahrrads 2 angeordnet und am Unterohr 26 befestigt. Der Kurbeltrieb 1 weist eine Tretkurbelwelle 4 auf, an deren freien Enden eine Tretkurbel 3 bzw. eine Tretkurbel 5 befestigt sind. Wie aus Figur 1 weiter ersichtlich, ist die Steuereinheit 15 am Unterohr 26 befestigt und mit dem elektromotorischen Hilfsantrieb 10 und der Bedieneinheit 28 an einem Lenker 30 des Fahrrads 2 verbunden. Die Steuereinheit 15 ist außerdem zur Energieversorgung ebenso wie der elektromotorische Hilfsantrieb 10 an der wiederaufladbaren Energiequelle 27 angeschlossen, die im oberen Rahmendreieck zwischen dem Unterrohr 26 und einem Oberrohr 29 angeordnet ist. Der elektromotorische Hilfsantrieb 10 ist über ein am Kurbeltrieb 1 befestigtes Zahnrad 17 mittels eines Zahnriemens 33 verbunden, welches unmittelbar benachbart zu einem Kettenblattträger 31 auf der gleichen Seite des Kurbeltriebs 1 angeordnet ist. Der Kettenblattträger 31 ist mit einem am Hinterrad des Fahrrads angeordneten Abtriebsritzel 25 über eine Kette 28 verbunden.

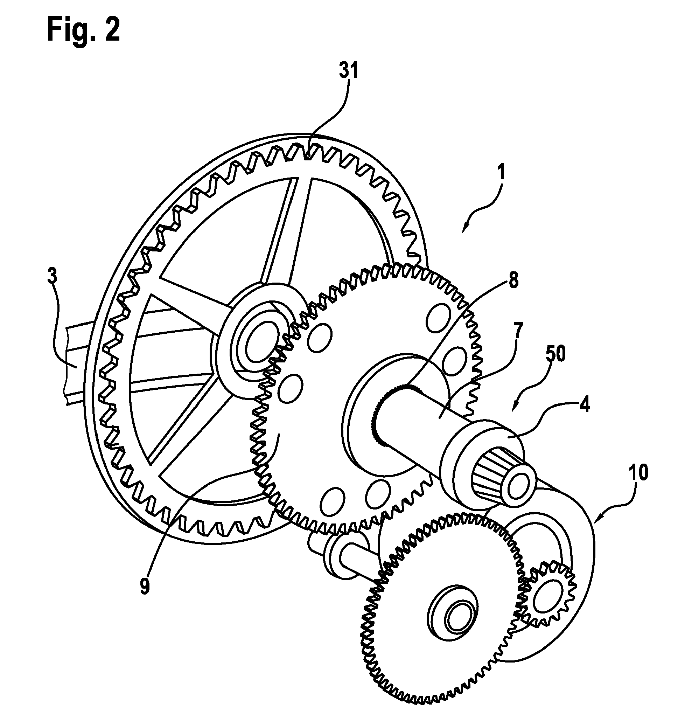

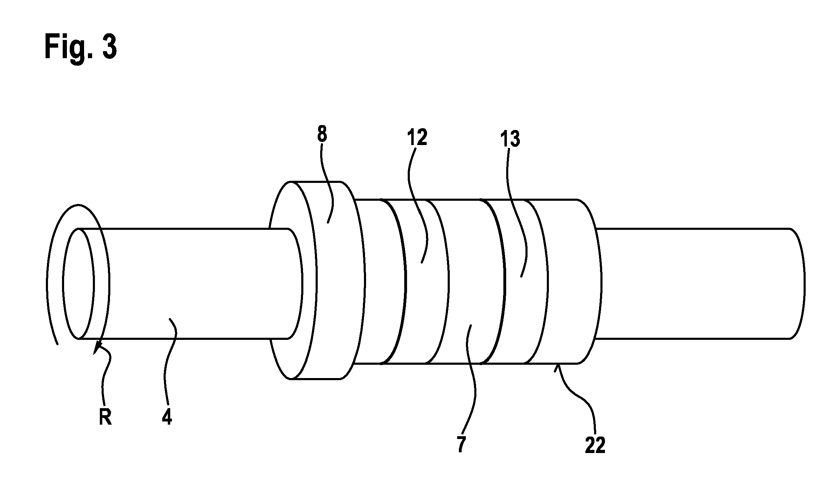

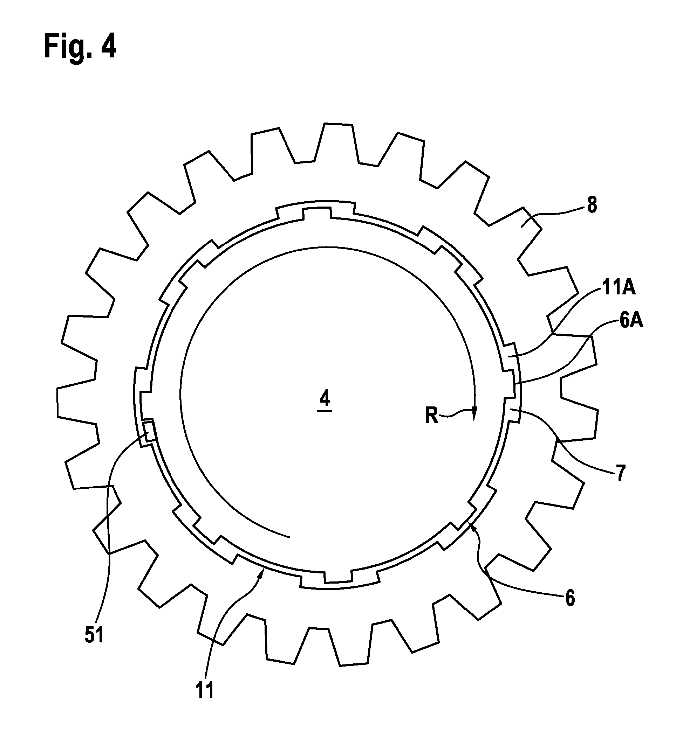

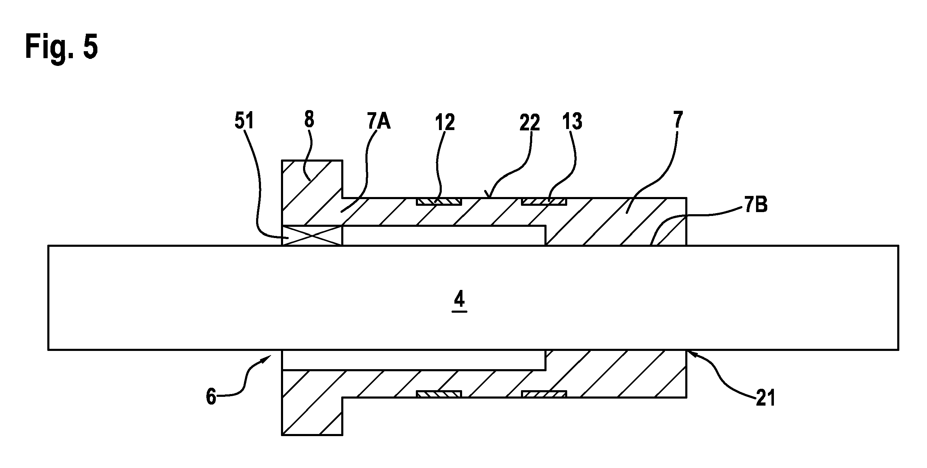

Wie aus Figur 2 ersichtlich, umfasst der Kurbeltrieb 1 ferner eine Sensoranordnung 50 mit einer Sensorhülse 7, an deren einem Ende 7A (vgl. Figur 4 und Figur 5) ein Außen-Zahnkranz 8 angeordnet ist, der in ein Getrieberad 9 des Hilfsantriebs 10 eingreift. Die Tretkurbelwelle 4 ist, wie aus Figur 4 ersichtlich, hierbei ein Teil der Sensoranordnung 50 und weist eine partielle Verzahnung (Verzahnung, die in Längsrichtung nicht durchgehend und/oder nicht komplett um 360° umlaufend ausgebildet ist) bzw. Außenverzahnung 6 auf, die die Tretkurbelwelle 4 in deren Länge vorzugsweise in einem Verhältnis von ca. 1/3 zu 2/3 teilt. Die Außenverzahnung 6 weist Zähne 6A auf, die gegenüber von Zähnen 11A einer Innenverzahnung 11 angeordnet sind, die ein Teil der auf die Tretkurbelwelle 4 aufgepressten Sensorhülse 7 sind. Zwischen den Zähnen 6A der Außenverzahnung 6 und den Zähnen 11A der Innenverzahnung 11 ist zumindest ein Piezoelement 51 zur Drehmomenterfassung in Richtung einer durch einen Pfeil R gekennzeichneten Drehrichtung angeordnet (siehe Fig. 3 und 4).

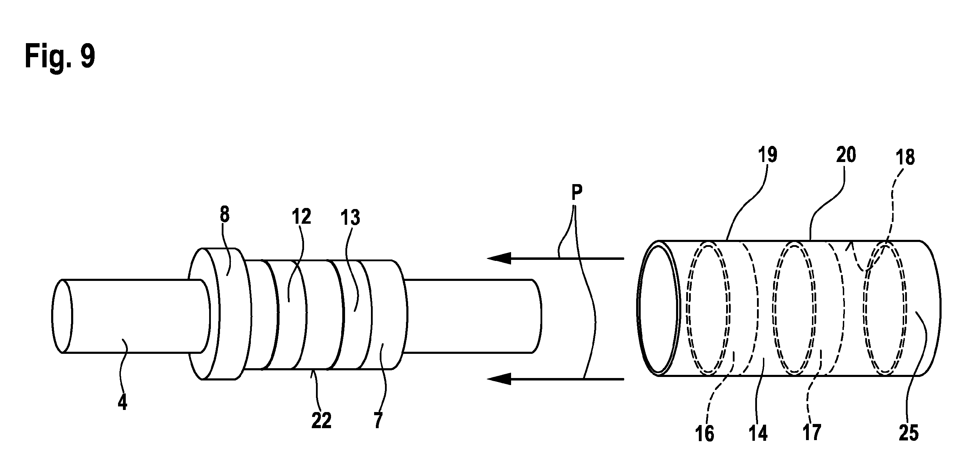

An einem anderen Ende 7B der Sensorhülse 7 ist, wie aus Figur 5 ersichtlich, eine Presspasseinrichtung 21 vorgesehen, mittels der die Sensorhülse 7 an der Tretkurbelwelle 4 fixiert ist. Zudem sind, wie aus Figur 3 ersichtlich, in etwa mittig auf einer Außenwand 22 der Sensorhülse 7 zwei zueinander beabstandete Metallringe 12, 13 angeordnet, die von der Sensorhülse 7 galvanisch getrennt sind. Die Metallringe 12, 13 sind über vorzugsweise in der Sensorhülse 7 integrierte, hier nicht sichtbare Leitungen mit dem Piezoelement 51 verbunden. Eine Kunststoffhülse 14 wird, wie weiter aus Figur 9 ersichtlich, in Richtung von Pfeilen P über die gesamte Tretkurbelwelle 4 geschoben. Die Kunststoffhülse 14 ist mittels eines an einem Ende angeordneten Lagers 25 auf der Tretkurbelwelle 4 derart gelagert, dass ein konstanter Abstand zwischen der Tretkurbelwelle 4 und der Kunststoffhülse 14 gewährleistet und die Kunststoffhülse 14 frei drehbar ist. Alternativ kann die Kunststoffhülse 14 auch mittels zweier Lager auf der Tretkurbelwelle 4 gelagert sein.

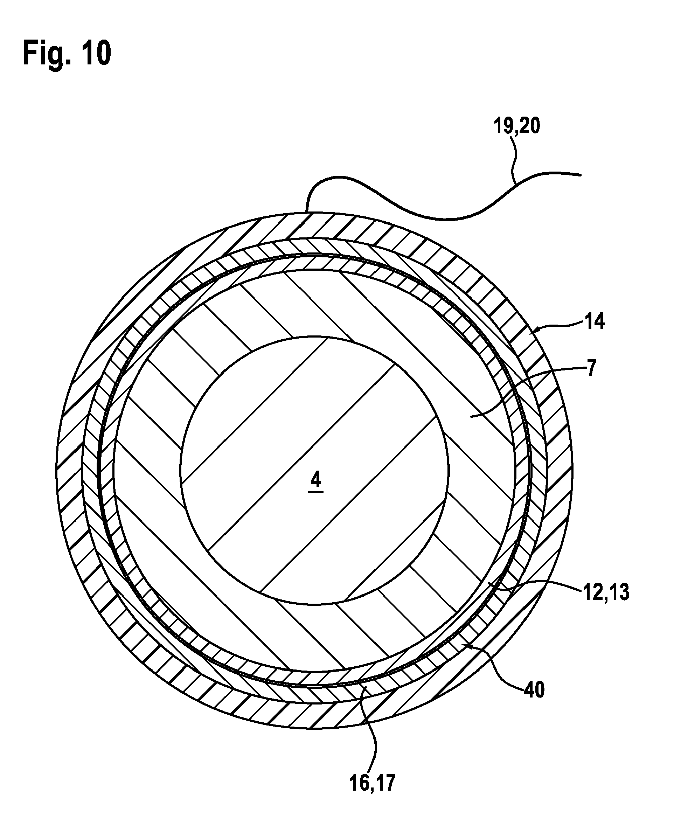

Die Kunststoffhülse 14 weist auf einer Innenwand 18 ebenfalls zwei beabstandete Metallringe 16, 17 auf, die im montierten Zustand der Kunststoffhülse 14 auf der Tretkurbelwelle 4 radial gegenüberliegend bzw. über deren Metallringen 12, 13 angeordnet sind. Die Metallringe 16, 17 sind mit je einer nach außen führenden Leitung 19, 20 zur Signalübertragung an die Steuereinheit 15 verbunden. Wie aus Figur 10 ersichtlich, wirken die leitfähigen Metallringe 12, 13 auf der Außenseite 22 der Sensorhülse 7 zusammen mit den Metallringen 16, 17 auf der Innenseite 18 der Kunststoffhülse 14 als Koppelkondensatoren 40 mit Luft als Dielektrikum, welche im Abstand dazwischen vorliegt.

Die Wirkkette beginnt mit einem vom Fahrer an den Tretkurbeln 3, 5 aufgebrachten Drehmoment, das die Tretkurbelwelle 4 in Rotation versetzt. Über die auf der Tretkurbelwelle 4 aufgepresste Sensorhülse 7 wird dann die Pedalkraft in Form eines Drehmoments auf das Getrieberad 9 übertragen, das in den Außen-Zahnkranz 8 der Sensorhülse 7 eingreift. Da die Sensorhülse 7 nur am Ende 7A auf die Tretkurbelwelle 4 aufgepresst ist, wird eine elastische Verdrehung der Sensorhülse 7 zwischen der Presspasseinrichtung 21 und dem Außen-Zahnkranz 8 erzeugt. Die Intensität der Verdrehung ist abhängig von einem Material und der Geometrie (Wandstärke/Länge) der Sensorhülse 7 sowie der Länge der Presspasseinrichtung 21. Über diese Parameter kann eine Einstellung/Anpassung der Verdrehungsstärke erfolgen.

Durch die Verdrehung des Außen-Zahnkranzes 8 bzw. der Innenverzahnung 11 der Sensorhülse 7 zur Tretkurbelwelle 4 erfährt das im Zwischenraum zwischen der Innenverzahnung 11 und der Außenverzahnung 6 angeordnete Piezoelement 51 durch Verkleinerung des Zwischenraums eine Krafteinwirkung. Durch diese Krafteinwirkung wird von den Kristallen des Piezoelements 51 eine Spannung erzeugt, welche auf die Metallringe 12, 13 der Sensorhülse 7 abgeleitet wird. Die konstruktive Ausführung ist so vorzugsweise ausgelegt, dass bei einem Drehmoment von Null, also keiner Krafteinwirkung, nahezu keine Spannung erzeugt wird. Damit kein negativer Offset bei der Drehmomenterfassung auftritt, sollte jedoch eine, wenn auch geringe, Grundverspannung zwischen dem Piezoelement und der Tretkurbelwelle 4 bzw. der Sensorhülse 7 gewährleistet sein. Entsprechend dem eingebrachten Drehmoment erhöht oder verringert sich die Krafteinwirkung auf die Piezokristalle. Damit erhöht oder verringert sich auch die auf die Metallringe 12, 13 abgeleitete Potenzialdifferenz (elektrische Spannung).

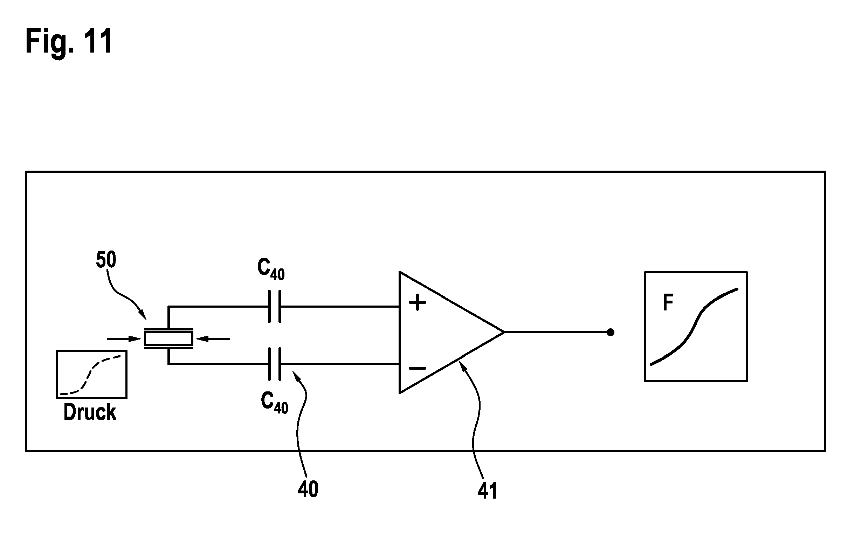

Dieser Potenzialunterschied ist direkt abhängig vom eingebrachten Drehmoment und kann über eine zu bestimmende, systemabhängige Übertragungsfunktion F (vgl. Figur 11) zu diesem zurückgerechnet werden. Die Art und Struktur dieser Übertragungsfunktion kann durch die Parameter der Verdrehung und das verwendete Piezomaterial beeinflusst/angepasst werden.

Die Übertragung der Potenzialdifferenz der beiden Metallringe 12, 13 der Sensorhülse 7 auf die Metallringe 16, 17 der Kunststoffhülse 14 findet durch kapazitive Koppelung bzw. mittels der Koppelkondensatoren 40 statt. Hierzu müssen die jeweils zugeordneten Metallringe 12, 13; 16, 17, wie oben beschrieben, auf der Tretkurbelwelle 4 bzw. der Kunststoffhülse 14 angeordnet sein. Durch das Lager 25 zwischen der Tretkurbelwelle 4 und der Kunststoffhülse 7 bleibt die Tretkurbelwelle 4 frei drehend und das Sensorsignal kann ohne zusätzliche Bauteile, wie z. B. Schleifkontakte o. ä., an der Kunststoffhülse 14 abgegriffen werden. Wie weiter aus Figur 11 ersichtlich, werden Kapazitäten $C_{40}$ der Koppel-

kondensatoren 40 zur Verarbeitung der Signale einem der Sensoranordnung 50 nachgeschalteten Operationsverstärker 41 zugeführt, dessen Schaltungsauslegung abhängig von der jeweiligen Einsatzart des Fahrrads 2 ist.

Eine Kapazität $C_{40}$ der Koppelkondensatoren 40 errechnet sich beispielhaft wie folgt:

Radius Sensorhülse: r = 20mm
Breite der Metallringe: b = 15mm
mittlerer Abstand der Metallringe: d = 0,5mm
Dielektrikum Luft: $\epsilon$ = 8,854 * $10^{-12}$ As/Vm

$$A = 2\pi * r * b = 1885mm^2$$

$$C_{40} = \epsilon * A/d = 3,77m * 8,854 * 10^{-12} \text{ As/Vm} = 33,38 \text{ pF}$$

Wie aus dieser Beispielrechnung zu sehen, ist eine Koppelkapazität $C_{40}$ von ca. 30 pF durchaus erreichbar, wenn der äußere Radius der Sensorhülse 7 ca. 2,5cm, die Breite der Metallringe 12, 13; 16, 17 gleich 1,5cm und der Abstand zwischen den gegenüberliegenden Metallringen 12, 13; 16, 17 ca. 0,5mm beträgt. Für die Berechnung wurde näherungsweise die Formel für einen idealen Plattenkondensator mit Luft als Dielektrikum verwendet.

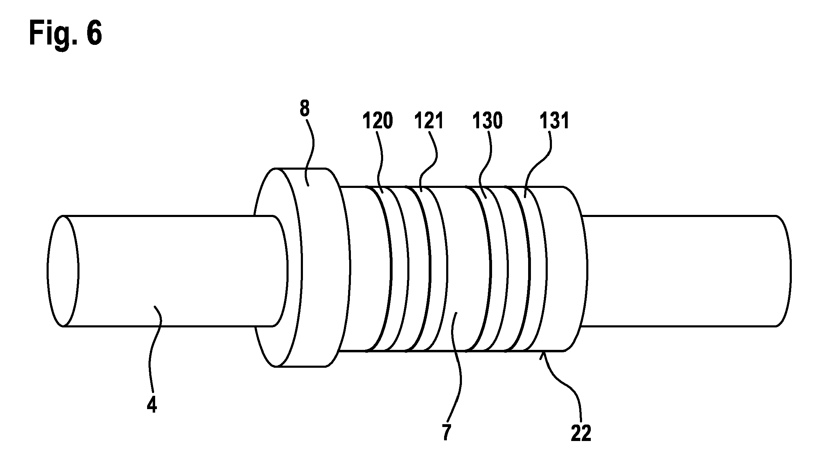

Nachfolgend wird mit Bezug auf Figur 6 bis Figur 8 ein erfindungsgemäßer Kurbeltrieb 1 gemäß einem zweiten bevorzugten Ausführungsbeispiel detailliert beschrieben. Gleiche oder funktional gleiche Bauteile sind hier mit denselben Bezugszeichen wie im ersten Ausführungsbeispiel bezeichnet.

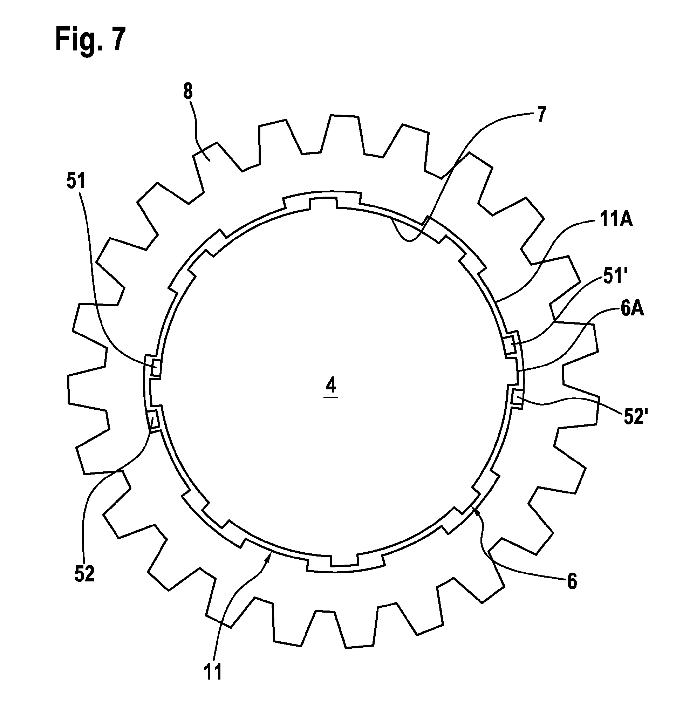

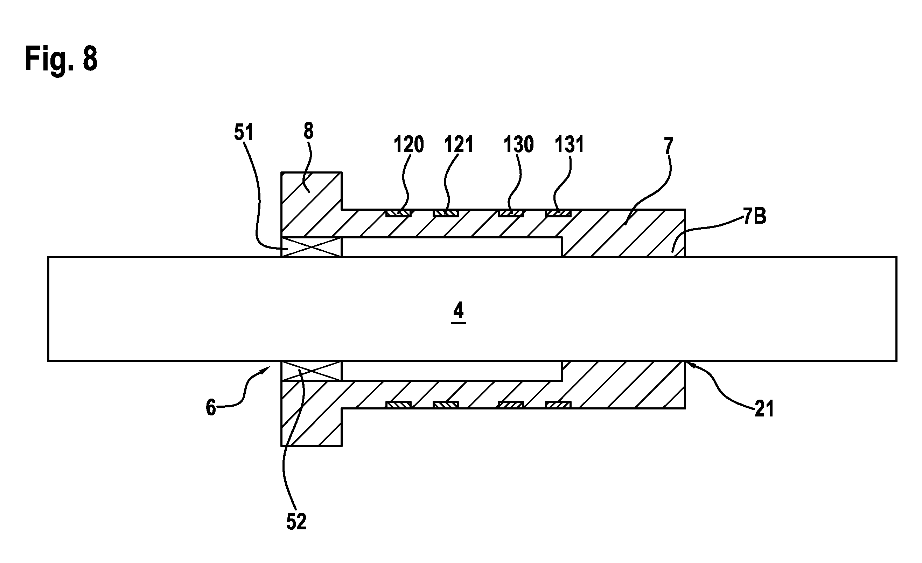

Im Gegensatz zum zuvor beschriebenen ersten Ausführungsbeispiel sind hierbei zur Drehmomenterfassung, wie aus Figur 7 ersichtlich, zwei Piezoelemente 51, 52 zwischen den Zähnen 6A der Außenverzahnung 6 und den Zähnen 11A der Innenverzahnung 11 vorgesehen. Ferner sind, wie aus Figur 6 und 8 ersichtlich, auf der Außenwand 22 der Sensorhülse 7 vier von dieser galvanisch getrennte Metallringe 120, 121, 130, 131 angeordnet. Gleichermaßen wie im ersten Ausführungsbeispiel ist eine hier nicht dargestellte Kunststoffhülse mit dementsprechend vier auf deren Innenwand angeordneten Metallringen vorgesehen, die über die Tretkurbelwelle 4 geschoben ist. Die Metallringe sind ebenfalls mit je einer zur Signalübertragung nach außen führenden Leitung verbunden. Durch diese Anordnung wird eine einfache und betriebssichere Drehmomenterfassung in beiden möglichen Drehrichtungen der Tretkurbelwelle 4 ermöglicht. Wie Figur 7 ferner verdeutlicht, ist es ferner möglich, zusätzliche Piezoelemente 51' und 52' gegenüber den Piezoelementen 51 und 52 vorzusehen. Durch diese zusätzlichen Piezoelemente 51' und 52' ist es vorteilhafterweise erreichbar, eine Signalverstärkung zu bewirken, da bei der Verkleinerung der zugeordneten Zwischenräume in beiden Drehrichtungen jeweils zwei Piezoelemente mit einer Kraft beaufschlagt werden, so dass sich eine Signalverstärkung ergibt.

Der erfindungsgemäße Kurbeltrieb 1 stellt mittels der Drehmoment-Sensoreinrichtung 50 eine berührungslose Erfassung des auf die Tretkurbelwelle 4 aufgebrachten Drehmoments mittels der Piezo-Sensoranordnung 50 bereit, die weitgehend unempfindlich gegen magnetische Störeinflüsse ist. Darüber hinaus können für die verwendeten Bauteile weitestgehend kostengünstige Standardmaterialien verwendet werden, die auch höchsten mechanischen Beanspruchungen im Fahrbetrieb standhalten.

Obwohl die Sensoranordnung 50 voranstehend am Beispiel eines Kurbeltriebes für ein Fahrrad erläutert wurde, ist die Sensoranordnung 50 nicht auf diesen Einsatzzweck beschränkt. Vielmehr stellt sie ein selbstständig handelbares Objekt dar, das zur Drehmomentmessung bei Wellen Verwendung finden kann, die Teil anderer technischer Anordnungen sind.

**Patentansprüche**

1. Kurbeltrieb für ein Fahrrad (2), umfassend:

- eine Tretkurbelwelle (4),
- zwei Tretkurbeln (3, 5), die an freien Enden der Tretkurbelwelle (4) fixiert sind, und
- eine Drehmoment-Sensoranordnung (50) zur Erfassung eines auf die Tretkurbelwelle (4) aufgebrachten Drehmoments,
- wobei die Drehmoment-Sensoranordnung als Piezo-Sensoranordnung (50) ausgebildet ist,

**dadurch gekennzeichnet, dass**

die Tretkurbelwelle (4) ein Teil der Sensoranordnung (50) ist, die eine Außenverzahnung (6) mit Zähnen (6A) aufweist, die gegenüber von Zähnen (11A) einer innenverzahnung (11) angeordnet sind, die ein Teil einer auf die Tretkurbeiwelle (4) aufgepressten Sensorhülse (7) sind, wobei zwischen den Zähnen (6A) der Außenverzahnung (6) und den Zähnen (11A) der Innenverzahnung (11) zumindest ein Piezoelement (51, 52) angeordnet ist.

**2.** Kurbeltrieb nach Anspruch 1, **dadurch gekennzeichnet, dass** die Sensorhülse (7) an einem Ende (7A) einen Außen-Zahnkranz (8) aufweist, der in ein Getrieberad (9) des Hilfsantriebes (10) eingreift.

**3.** Kurbeitrieb nach Anspruch 1 oder 2, **dadurch gekennzeichnet, dass** an einem anderen Ende (7B) der Sensorhülse (7) eine Presspasseinrichtung (21) zur Tretkurbeiwelle (4) angeordnet ist.

**4.** Kurbeltrieb nach einem der Ansprüche 1 bis 3, **dadurch gekennzeichnet, dass** in etwa mittig auf eine Außenwand (22) der Sensorhülse (7) zumindest zwei zueinander beabstandate Metallringe (12, 13; 120, 121, 130, 131) angeordnet sind, die galvanisch von der Sensorhülse (7) getrennt sind.

**5.** Kurbeltrieb nach Anspruch 4, **dadurch gekennzeichnet, dass** die Metallringe (12, 13; 120, 121, 130, 131) über, vorzugsweise in der Sensorhülse (7) integrierte, Leitungen mit den Piezoelementen zwischen der Innenverzahnung (11) der Sensorhülse (7) bzw. der Außenverzahnung (6) der Tretkurbeiwelle (4) verbunden sind.

**6.** Kurbeltrieb nach einem Ansprüche 1 bis 5, **dadurch gekennzeichnet, dass** eine Kunststoffhülse (14) über der gesamten Tretkurbelwelle (4) angeordnet ist, die um die Tretkurbelwelle (4) frei drehbar ist.

**7.** Kurbeltrieb nach Anspruch 6, **dadurch gekennzeichnet, dass** die Kunststoffhülse (14) auf ihrer innenwand (18) mit zumindest zwei beabstandeten Metallringen (16, 17) versehen ist, die mit je einer nach außen führenden Leitung (19, 20) verbunden sind und die im Montagezustand der Kunststoffhülse (14) auf der Tretkurbelwelle (4) über deren Metallringen (12, 13) angeordnet sind.

**8.** Kurbeltrieb nach Anspruch 6 oder 7, **dadurch gekennzeichnet, dass** die Kunststoffhülse (14) an einem oder beiden ihrer Enden über jeweils ein Lager (26) auf der Tretkurbelwelle (4) gelagert ist.

**9.** Kurbeltrieb nach einem Ansprüche 1 bis 8, **dadurch gekennzeichnet, dass** die Außenverzahnung (6) derTretkurbelwelle (4) als partielle Verzahnung ausgebildet ist.

**10.** Kurbeltrieb nach einem der Ansprüche 1 bis 9, **gekennzeichnet durch** einen elektromotorischen Hilfsantrieb (10).

**11.** Kurbeltrieb nach einem der Ansprüche 1 bis 10, **dadurch gekennzeichnet, dass** die Außenverzahnung (6) die Tretkurbelwelle (4) in ihrer Länge in etwa 1/3 zu 2/3 teilt.

**12.** Fahrrad mit einem Kurbeltrieb (1), umfassend:

- eine Tretkurbelwelle (4), zwei Tretkurbeln (3, 5), die an frelen Enden der Tretkurbelwelle (4) fixiert sind, und eine Drehmoment-Sensoranordnung (50) zur Erfassung eines auf die Tretkurbelwelle (4) aufgebrachten Drehmoments,
- wobei die Drehmoment-Sensoranordnung als PiezoSensoranordnung (50) ausgebildet ist

**dadurch gekennzeichnet, dass**
die Tretkurbelwelle (4) ein Teil der Sensoranordnung (50) ist, die eine Außenverzahnung (6) mit Zähnen (6A) aufweist, die gegenüber von Zähnen, (11A) einer innenverzahnung (11) angeordnet sind, die ein Teil einer auf die Tretkurbelwelle (4) aufgepressten Sensorhülse (7) sind, wobei zwischen den Zähnen (6A) der Außenverzahnung (6) und den Zähnen (11A) der Innenverzahnung (11) zumindest ein Piezoelement (51, 52) angeordnet ist.

**13.** Fahrrad nach Anspruch 12, **gekennzeichnet durch** wenigstens eines der Merkmale der Ansprüche 2 bis 11.

**14.** Sensoranordnung (50) mit einer Welle (4), die eine Außenverzahnung (6) mit Zähnen (6A) aufweist, die gegenüber von Zähnen (11A) einer Innenverzahnung (11) angeordnet sind, die einen Teil einer auf die Welle (4) aufgepressten Sensorhülse (7) sind, wobei zwischen den Zähnen (6A) der Außenverzahnung (6) und den Zähnen (11A) der Innenverzahnung (11) zumindest ein Piezoelement (51, 52) angeordnet ist.

**EP 2 694 935 B1**

**Claims**

1. Crank mechanism for a bicycle (2), comprising:

   - a pedal crank shaft (4),
   - two pedal cranks (3, 5) which are fixed at free ends of the pedal crank shaft (4), and
   - a torque sensor arrangement (50) for detecting a torque which is applied to the pedal crank shaft (4),
   - the torque sensor arrangement being configured as a piezoelectric sensor arrangement (50),

   **characterized in that**
   the pedal crank shaft (4) is part of the sensor arrangement (50) which has an external toothing system (6) with teeth (6A) which are arranged opposite teeth (11A) of an internal toothing system (11) which are part of a sensor sleeve (7) which is pressed onto the pedal crank shaft (4), at least one piezoelectric element (51, 52) being arranged between the teeth (6A) of the external toothing system (6) and the teeth (11A) of the internal toothing system (11).

2. Crank mechanism according to Claim 1, **characterized in that**, at one end (7A), the sensor sleeve (7) has an external toothed rim (8) which engages into a gear mechanism gear (9) of the auxiliary drive (10).

3. Crank mechanism according to Claim 1 or 2, **characterized in that** an interference fit device (21) to the pedal crank shaft (4) is arranged at another end (7B) of the sensor sleeve (7).

4. Crank mechanism according to one of Claims 1 to 3, **characterized in that** at least two metal rings (12, 13; 120, 121, 130, 131) which are spaced apart from one another and are separated galvanically from the sensor sleeve (7) are arranged approximately centrally on an outer wall (22) of the sensor sleeve (7).

5. Crank mechanism according to Claim 4, **characterized in that** the metal rings (12, 13; 120, 121, 130, 131) are connected via lines which are preferably integrated into the sensor sleeve (7) to the piezoelectric elements between the internal toothing system (11) of the sensor sleeve (7) and the external toothing system (6) of the pedal crank shaft (4).

6. Crank mechanism according to one of Claims 1 to 5, **characterized in that** a plastic sleeve (14) is arranged over the entire pedal crank shaft (4), which plastic sleeve (14) can be rotated freely about the pedal crank shaft (4).

7. Crank mechanism according to Claim 6, **characterized in that**, on its inner wall (18), the plastic sleeve (14) is provided with at least two metal rings (16, 17) which are spaced apart, are connected to in each case one outwardly leading line (19, 20) and are arranged in the assembled state of the plastic sleeve (14) on the pedal crank shaft (4) over its metal rings (12, 13).

8. Crank mechanism according to Claim 6 or 7, **characterized in that** the plastic sleeve (14) is mounted at one or both of its ends via in each case one bearing (26) on the pedal crank shaft (4).

9. Crank mechanism according to one of Claims 1 to 8, **characterized in that** the external toothing system (6) of the pedal crank shaft (4) is configured as a partial toothing system.

10. Crank mechanism according to one of Claims 1 to 9, **characterized by** an electric motor auxiliary drive (10).

11. Crank mechanism according to one of Claims 1 to 10, **characterized in that** the external toothing system (6) shares approximately 1/3 to 2/3 the length of the pedal crank shaft (4).

12. Bicycle having a crank mechanism (1), comprising:

    - a pedal crank shaft (4), two pedal cranks (3, 5) which are fixed at free ends of the pedal crank shaft (4), and a torque sensor arrangement (50) for detecting a torque which is applied to the pedal crank shaft (4),
    - the torque sensor arrangement being configured as a piezoelectric sensor arrangement (50),

    **characterized in that**
    the pedal crank shaft (4) is part of the sensor arrangement (50) which has an external toothing system (6) with teeth (6A) which are arranged opposite teeth (11A) of an internal toothing system (11) which are part of a sensor sleeve

7

(7) which is pressed onto the pedal crank shaft (4), at least one piezoelectric element (51, 52) being arranged between the teeth (6A) of the external toothing system (6) and the teeth (11A) of the internal toothing system (11).

13. Bicycle according to Claim 12, **characterized by** at least one of the features of Claims 2 to 11.

14. Sensor arrangement (50) having a shaft (4) which has an external toothing system (6) with teeth (6A) which are arranged opposite teeth (11A) of an internal toothing system (11) which are part of a sensor sleeve (7) which is pressed onto the shaft (4), at least one piezoelectric element (51, 52) being arranged between the teeth (6A) of the external toothing system (6) and the teeth (11A) of the internal toothing system (11).

**Revendications**

1. Mécanisme à manivelle pour bicyclette (2), comprenant :

   - un axe de pédalier (4),
   - deux pédaliers (3, 5) fixés à des extrémités libres de l'axe de pédalier (4), et
   - un système capteur de couple de rotation (50) pour détecter un couple de rotation appliqué à l'axe de pédalier (4),
   - dans lequel le système capteur de couple de rotation est réalisé sous la forme d'un système capteur piézoélectrique (50),

   **caractérisé en ce que** l'axe de pédalier (4) est une partie du système capteur (50) comportant une denture extérieure (6) munie de dents (6A) disposées en face de dents (11A) d'une denture intérieure (11), qui font partie d'un manchon de capteur (7) emmanché sur l'axe de pédalier (4), dans lequel au moins un élément piézoélectrique (51, 52) est disposé entre les dents (6A) de la denture extérieure (6) et les dents (11A) de la denture intérieure (11).

2. Mécanisme à manivelle selon la revendication 1, **caractérisé en ce que** le manchon de capteur (7) comporte, à une extrémité (7A), une couronne dentée extérieure (8) qui s'engage dans un pignon (9) de l'entraînement auxiliaire (10).

3. Mécanisme à manivelle selon la revendication 1 ou 2, **caractérisé en ce qu'**un dispositif d'adaptation de pression (21) à l'axe de pédalier (4) est disposé sur une autre extrémité (7B) du manchon de capteur (7).

4. Mécanisme à manivelle selon l'une quelconque des revendications 1 à 3, **caractérisé en ce qu'**au moins deux bagues métalliques (12, 13 ; 120, 121, 130, 131) espacées l'une de l'autre sont disposées pratiquement au centre d'une paroi extérieure (22) du manchon de capteur (7), lesquelles bagues sont séparées de manière galvanique du manchon de capteur (7).

5. Mécanisme à manivelle selon la revendication 4, **caractérisé en ce que** les bagues métalliques (12, 13 ; 120, 121, 130, 131) sont reliées par l'intermédiaire de lignes, de préférence intégrées au manchon de capteur (7), aux éléments piézoélectriques entre la denture intérieure (11) du manchon de capteur (7) et la denture extérieure (6) de l'axe de pédalier (4).

6. Mécanisme à manivelle selon l'une quelconque des revendications 1 à 5, **caractérisé en ce qu'**un manchon en matière plastique (14), qui peut être mis en rotation librement autour de l'axe de pédalier (4), est disposé sur la totalité de l'axe de pédalier (4).

7. Mécanisme à manivelle selon la revendication 6, **caractérisé en ce que** le manchon en matière plastique (14) est muni sur sa paroi intérieure (18) d'au moins deux bagues métalliques (16, 17) espacées, qui sont respectivement reliées à une ligne (19, 20) conduisant vers l'extérieur et qui, à l'état monté du manchon en matière plastique (14), sont disposées sur l'axe de pédalier (4) sur ses bagues métalliques (12, 13).

8. Mécanisme à manivelle selon la revendication 6 ou 7, **caractérisé en ce que** le manchon en matière plastique (14), à l'une de ses extrémités ou aux deux, est/sont respectivement montée(s) sur l'axe de pédalier (4) par l'intermédiaire d'un palier (26).

9. Mécanisme à manivelle selon l'une quelconque des revendications 1 à 8, **caractérisé en ce que** la denture extérieure (6) de l'axe de pédalier (4) est réalisée sous la forme d'une denture partielle.

**10.** Mécanisme à manivelle selon l'une quelconque des revendications 1 à 9, **caractérisé par** un entraînement auxiliaire (10) à moteur électrique.

**11.** Mécanisme à manivelle selon l'une quelconque des revendications 1 à 10, **caractérisé en ce que** la denture extérieure (6) divise pratiquement l'axe de pédalier (4) sur sa longueur selon un rapport de 1/3 à 2/3.

**12.** Bicyclette comportant un mécanisme à manivelle (1), comprenant :

- un axe de pédalier (4), deux pédaliers (3, 5) qui sont fixés à des extrémités libres de l'axe de pédalier (4), et un système capteur de couple de rotation (50) pour détecter un couple de rotation appliqué à l'axe de pédalier (4),
- dans lequel le système capteur de couple de rotation est réalisé sous la forme d'un système capteur piézoélectrique (50),

**caractérisé en ce que** l'axe de pédalier (4) est une partie du système capteur (50) qui comporte une denture extérieure (6) munie de dents (6A) disposées en face de dents (11A) d'une denture intérieure (11) faisant partie d'un manchon de capteur (7) emmanché sur l'axe de pédalier (4), dans lequel au moins un élément piézoélectrique (51, 52) est disposé entre les dents (6A) de la denture extérieure (6) et les dents (11A) de la denture intérieure (11).

**13.** Bicyclette selon la revendication 12, **caractérisé par** au moins l'une des caractéristiques des revendications 2 à 11.

**14.** Système capteur (50) ayant un arbre (4) qui comporte une denture extérieure (6) munie de dents (6A) disposées en face de dents (11A) d'une denture intérieure (11) faisant partie d'un manchon de capteur (7) emmanché sur l'arbre (4), dans lequel au moins un élément piézoélectrique (51, 52) est disposé entre les dents (6A) de la denture extérieure (6) et les dents (11A) de la denture intérieure (11).

Fig. 1

EP 2 694 935 B1

# Fig. 2

**Fig. 3**

# Fig. 4

**Fig. 5**

EP 2 694 935 B1

**Fig. 6**

EP 2 694 935 B1

# Fig. 7

# Fig. 8

EP 2 694 935 B1

**Fig. 9**

EP 2 694 935 B1

**Fig. 10**

**Fig. 11**

EP 2 694 935 B1

**IN DER BESCHREIBUNG AUFGEFÜHRTE DOKUMENTE**

**In der Beschreibung aufgeführte Patentdokumente**

- JP 2011025876 B